# EUROPEAN PATENT APPLICATION

(11) **EP 4 804 093 A1**
(43) Date of publication of application: **09.09.2026**
(21) Application number: 25162074.6
(22) Date of filing: 06.03.2025
(51) Int. Cl.: G06Q 10/087, B65G 1/137

(54) **CONTAINER WEIGHT MONITORING**

(71) Applicant: AutoStore Technology AS, 5578 Nedre Vats (NO)
(72) Inventor: JOSHI, Parth, 5578 Nedre Vats (NO); MÆHLE, Ole Alexander, 5578 Nedre Vats (NO); CARROZZO, Margherita, 5578 Nedre Vats (NO)
(74) Representative: Kilburn & Strode LLP

(57) **Abstract**

The disclosure relates to a controller (504) for container weight monitoring in an automated storage and retrieval system. The controller receives (S100) a measured container weight of a first container. The measured container weight is measured by a weight measuring component (502) of the automated storage and retrieval system. The controller compares (S105) at least one weight parameter to at least one weight threshold. The at least one weight parameter is determined using the measured container weight. The controller controls (S110) the automated storage and retrieval system to configure an arrangement of containers in the automated storage and retrieval system based upon the comparison.

## Description

### TECHNICAL FIELD

The disclosure relates to the monitoring of the weight of containers. More particularly, it relates to the monitoring of the weight of containers in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

When stacking containers in the automated storage and retrieval system, weight limits may be considered. Exceeding such weight limits can lead to damage to the containers and/or storage system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 is a block diagram of the components of the container weight monitoring system;
Fig. 6 shows a flow chart of a process for monitoring the weight of a container;
Fig. 7 shows a flow chart of a process for monitoring the weight of a container that involves determining whether a first container has a weight that would cause a second container to exceed a stacking weight limit;
Fig. 8 shows a flow chart of a process for monitoring the weight of a container that involves determining whether a first container has a weight that would cause a column or group of columns of containers to exceed a weight limit for the column or the group of columns; and
Fig. 9 shows a flow chart of a process for monitoring the weight of a container that involves determining whether the weight of the container exceeds a weight limit for the container.

### DETAILED DESCRIPTION

An approach to considering the weight and weight-bearing capacity of containers stacked in an automated storage and retrieval system is to assume that all containers in the storage system are filled to their maximum weight capacity.

For example, if the containers have a weight limit of X kg, and a weight-bearing capacity (i.e., the maximum weight that can be safely stacked on the container) of 10X kg, a bottom container in a stack can have 10 containers that are filled to their maximum weight capacity stacked thereon. As the containers in the stack will actually be at or under their weight limit, exceeding the weight-bearing capacity of the bottom container in the stack is avoided if the stack is limited to having 10 containers stacked on-top of the bottom container (i.e., 11 containers total in the stack) because the maximum weight stacked on the bottom container will not exceed 10X kg.

In another example, if the containers have a weight limit of X kg, and an area of the warehouse floor on which the containers are positioned has a weight limit of 10X kg, the stack is limited to 10 containers on the assumption that they are filled to their maximum weight capacity.

However, when containers are not filled to their weight limit, this approach in assuming that all containers are filled to their maximum weight capacity leads to a redundancy in capacity, and wasted space in the storage system, because more containers could be added to the stack before weight limits are exceeded.

In overview, the present disclosure relates to weight monitoring in an automated storage and retrieval system comprising a plurality of containers. A controller is configured to receive a measured container weight of a first container in the automated storage and retrieval system. The measured container weight is measured by a weight measuring component. Then, a weight parameter is determined using the measured container weight, and the weight parameter is compared to a weight threshold. An arrangement of containers in the automated storage and retrieval system is then configured based upon the comparison.

In this way, the configuration of the containers in the automated storage and retrieval system is based upon actual container weights, rather than an assumption that all containers are filled to their maximum weight capacity. Moreover, exceeding weight limits in container stacks is avoided, whilst also avoiding wasted storage capacity for example by allowing taller stacks of containers. This makes better and more efficient use of storage capacity.

### Automated storage and retrieval system overview

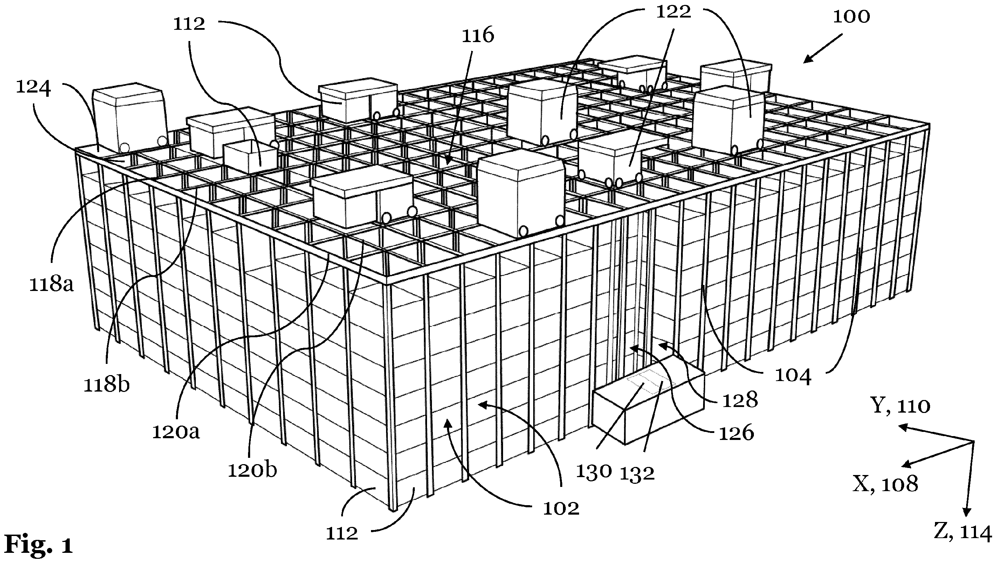

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (interchangeably referred to as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

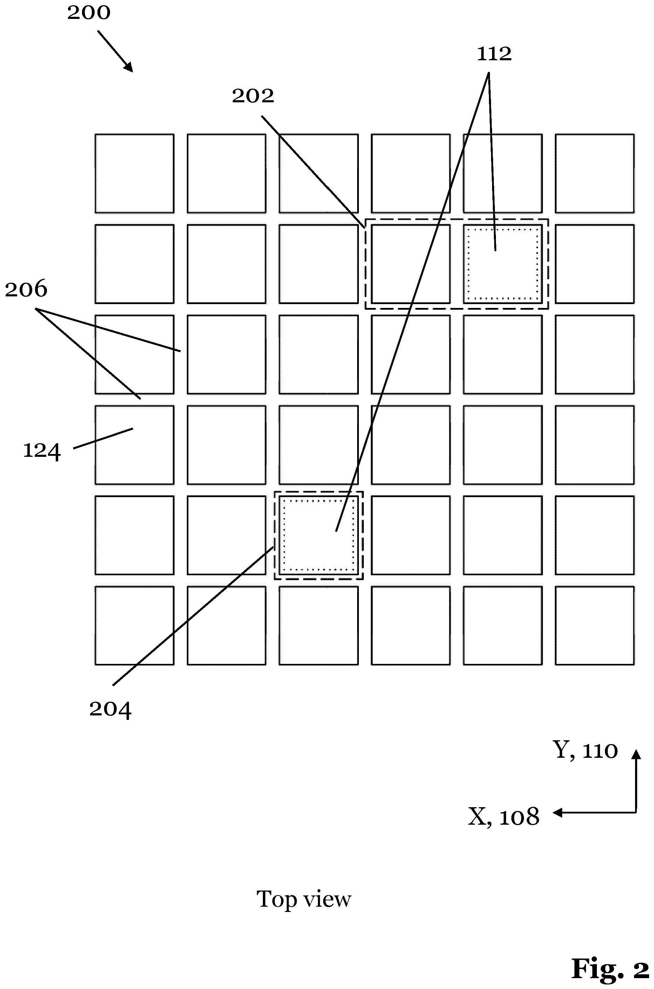

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

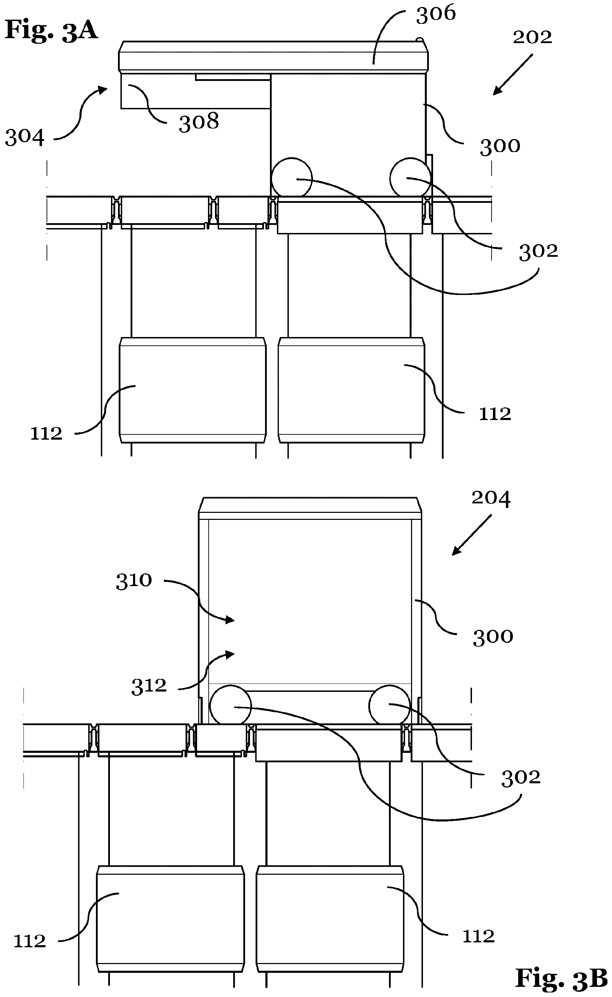

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

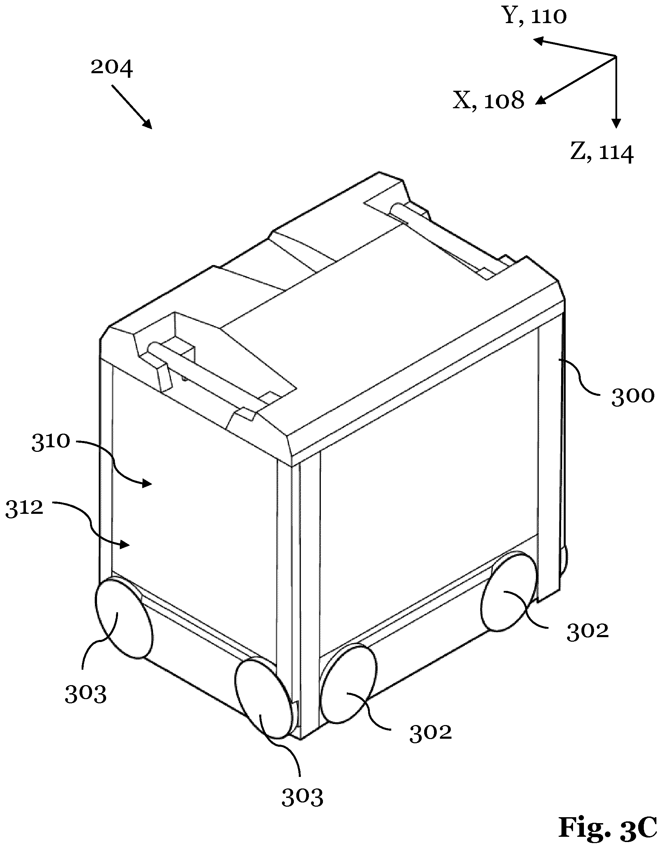

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

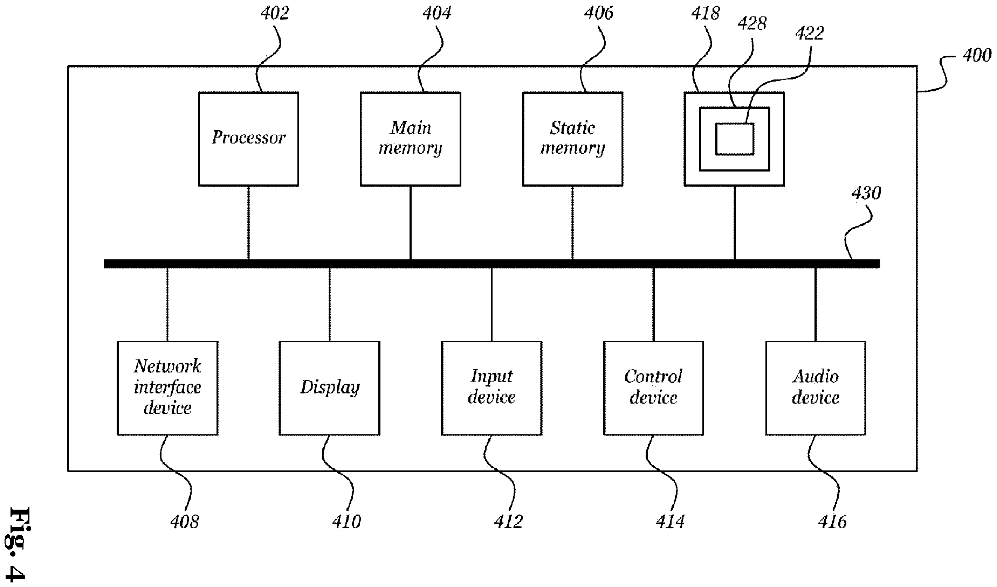

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Container weight monitoring

Each container in an automated storage and retrieval system can have a maximum weight-bearing capacity for the weight of containers that can be stacked on-top of said container (also referred to as a stacking weight). This is the weight that can safely be stacked on-top of the container. There can also be weight limits for the warehouse floor on which the stack or stacks of containers are positioned, and also weight limits for the containers themselves.

As discussed, an approach to considering the weight of containers is to assume that all containers in the automated storage and retrieval system are filled to their maximum weight capacity to avoid exceeding weight limits. However, when containers are not filled to their maximum weight capacity, there is a redundancy in capacity, and wasted space in the automated storage and retrieval system, because more containers could be added to the stack before weight limits are exceeded. As discussed, the present disclosure provides a container weight monitoring processes to avoid exceeding weight limits, whilst also providing a better usage of storage capacity in the automated storage and retrieval system for example by allowing for taller container stacks.

The present disclosure provides a container weight monitoring process.

A controller is provided for container weight monitoring in an automated storage and retrieval system comprising a plurality of containers. The controller can be configured to receive a measured container weight of a first container in the automated storage and retrieval system. The measured container weight can be measured by a weight measuring component of the automated storage and retrieval system.

The controller can also be configured to compare at least one weight parameter in the automated storage and retrieval system to at least one weight threshold. The at least one weight parameter can be determined using the measured container weight.

The controller can also be configured to control the automated storage and retrieval system to configure an arrangement of containers in the automated storage and retrieval system based upon the comparison.

In this way, the configuration of the containers in the automated storage and retrieval system can based upon actual container weights. This makes better and more efficient use of storage capacity.

In a first implementation of the container weight monitoring process, wherein the plurality of containers in the automated storage and retrieval system are arranged in one or more columns of stacked containers, the controller can be configured to access a datastore comprising weight data of containers in a first column of the one or more columns. The first column can be a column to which the first container is intended to be added.

The weight data can comprise and/or be based on predetermined weights of the containers already located in the first column.

The controller can be configured to determine a stacking weight for each container in the first column from the weight data.

Stacking weight can correspond to the total weight of other containers stacked on a respective container in a column.

The controller can be configured to calculate an updated stacking weight for each container arranged to be under the first container in the first column using the measured container weight of the first container.

The updated stacking weight for each container can be calculated by adding the measured container weight of the first container to yield the updated stacking weight for each container.

The at least one weight parameter can comprise the updated stacking weights for each container. The at least one weight threshold can comprise respective predetermined maximum stacking weight limits for each container in the first column.

The controller can compare at least one weight parameter in the automated storage and retrieval system to at least one weight threshold. That is, in the first implementation of the container weight monitoring process, the controller can compare the updated stacking weights for each container to the respective predetermined maximum stacking weight limits for each container in the first column.

When controlling the automated storage and retrieval system to configure the arrangement of containers, the controller can be configured to control the automated storage and retrieval system to add the first container to the first column when the updated stacking weights for each of the containers in the first column do not exceed the respective predetermined maximum stacking weight limits for each of the containers.

The controller can control the automated storage and retrieval system to add the first container to the first column by sending instructions to a container-handling robotic vehicle that is assigned to transport the first container. The instructions can direct the container-handling robotic vehicle to the first column. The instructions can instruct the container-handling robotic vehicle to add the container to the first column. When the weight measuring component is arranged at a port, the instructions can also direct the container-handling robotic vehicle to the port to collect the container from the port.

When controlling the automated storage and retrieval system to configure the arrangement of containers, the controller can be configured to control the automated storage and retrieval system to reconfigure the container arrangement in the automated storage and retrieval system when the updated stacking weight of at least one container in the first column does exceed the respective predetermined maximum stacking weight limit for the container.

When controlling the automated storage and retrieval system to reconfigure the container arrangement, the controller can be configured to determine a second column of the one or more columns. The second column can be a different column to the first column wherein adding the first container to the second column does not cause any containers in the second column to exceed a respective predetermined maximum stacking weight limit.

The controller can also be configured to control the automated storage and retrieval system to add the first container to the second column.

The controller can send instructions to a container-handling robotic vehicle that is assigned to transport the first container. The instructions can direct the container-handling robotic vehicle to the second column. The instructions can instruct the container-handling robotic vehicle to add the container to the second column. When the weight measuring component is arranged at a port, the instructions can also direct the container-handling robotic vehicle to the port to collect the container from the port.

When no column can be determined for which the updated stacking weights for each of the containers in the said column do not exceed the respective predetermined maximum stacking weight limits for each of the containers in said column, the container can be refused from the automated storage and retrieval system. The container may not be stored in the automated storage and retrieval system for example until the weight of the container is reduced by removing some of the contents, or the container can be held out of the system until capacity is available.

In this way, the controller can determine whether adding the first container to the first column will cause any of the containers in the first column to exceed their maximum stacking weight limit. If one of the containers will exceed their maximum stacking weight limit, the controller can determine a different column (i.e., the second column) to which adding the first container does not cause any containers therein to exceed their stacking weight limits; the first container can then be added to this second column. This allows for containers to be added to a column until one of the containers in the column would exceed its maximum stacking weight limit; consequently, by determining the actual weight of each container, the columns can be made taller compared to instead assuming each container is filled to its maximum load weight (i.e., if containers are filled below their weight limit, more can be added to a container stack before a maximum stacking weight limit for a container in the stack is met). Better use of storage space can therefore be brought about by having taller container stacks. At the same time, the risk of exceeding the maximum stacking weight limit of a container is mitigated because the actual weight stacked on each container is monitored by determining the actual weight of each container, rather than making an assumption as to the container weight.

In a second implementation of the container weight monitoring process, the plurality of containers in the automated storage and retrieval system can be arranged in one or more columns of stacked containers. The controller can be configured to access a datastore comprising weight data of containers in a first column of the one or more columns. The first column can be a column to which the first container is intended to be added.

The controller can be configured to determine a column weight for the first column from the weight data. The column weight can correspond to a combined weight of all containers in the first column.

The controller can be configured to calculate an updated column weight for the first column by adding the measured container weight of the first container.

The at least one weight parameter can comprise the updated column weight for the first column. The at least one weight threshold can comprise a predetermined maximum column weight limit for the first column.

The weight threshold can be based on a weight limit for a floor area on which the first column is arranged.

When controlling the automated storage and retrieval system to configure the arrangement of containers, the controller can be configured to control the automated storage and retrieval system to add the first container to the first column when the weight parameter does not exceed the weight threshold.

When controlling the automated storage and retrieval system to configure the arrangement of containers, the controller can be configured to control the automated storage and retrieval system to reconfigure the container arrangement in the automated storage and retrieval system when the weight parameter does exceed the weight threshold.

When controlling the automated storage and retrieval system to reconfigure the container arrangement, the controller can be configured to determine a second column of the one or more columns. The second column can be a different column to the first column wherein adding the first container to the second column does not cause the weight parameter to exceed the weight threshold.

The weight data can comprise and/or be based on the predetermined weights of containers located in a first group of columns including the first column. The at least one weight parameter can comprise an updated total weight of the first group of columns that includes the updated column weight for the first column. The at least one weight threshold can comprise a predetermined maximum weight limit for the first group of columns.

When controlling the automated storage and retrieval system to configure the arrangement of containers, the controller can be configured to control the automated storage and retrieval system to add the first container to the first column when the updated total weight of the first group of columns that includes the updated column weight for the first column does not exceed the predetermined maximum weight limit for the first group of columns.

When controlling the automated storage and retrieval system to configure the arrangement of containers, the controller can be configured to control the automated storage and retrieval system to reconfigure the container arrangement when the updated total weight of the first group of columns that includes the updated column weight for the first column exceeds the predetermined maximum weight limit for the first group of columns.

When controlling the automated storage and retrieval system to reconfigure the container arrangement, the controller can be configured to determine a second column of the one or more columns. The second column can be a different column to the first column, and in a second group of columns that is a different group of columns to the first groups of columns, wherein adding the first container to the second column does not cause the updated total weight of the second group of columns to exceed the predetermined maximum weight limit for the second group of columns.

The second group of columns can be a discrete group of columns compared to the first group of columns, with no columns being in both groups. Alternatively, the second group of columns can overlap the first group of columns, with at least one column shared between the first group and the second group.

When controlling the automated storage and retrieval system to add the first container to the first column, the controller can send instructions to a container-handling robotic vehicle that is assigned to transport the first container. The instructions can direct the container-handling robotic vehicle to the first column. The instructions can instruct the container-handling robotic vehicle to add the first container to the first column. When the weight measuring component is arranged at a port, the instructions can also direct the container-handling robotic vehicle to the port to collect the first container from the port.

When controlling the automated storage and retrieval system to add the first container to the second column, the controller can send instructions to a container-handling robotic vehicle that is assigned to transport the first container. The instructions can direct the container-handling robotic vehicle to the second column. The instructions can instruct the container-handling robotic vehicle to add the first container to the second column. When the weight measuring component is arranged at a port, the instructions can also direct the container-handling robotic vehicle to the port to collect the first container from the port.

In this way, the controller can determine whether adding the first container to the first column will cause the first column (or a group of columns containing the first column) to exceed a predetermined maximum column weight limit for the first column (or a predetermined maximum weight limit for the group of columns including the first column). If adding the first container to the first column (or a group of columns containing the first column) will cause the first column (or a group of columns containing the first column) to exceed the predetermined maximum column weight limit for the first column (or the predetermined maximum weight limit for the group of columns including the first column), the controller can determine a different column (i.e., the second column) to which adding the first container does not cause the updated column weight of this different column (or updated total weight of a group of columns that includes the updated column weight for this different column) to exceed the predetermined maximum column weight limit for this different column (or the predetermined maximum weight limit for the group of columns including this different column). This allows for containers to be added to a column until the weight limit for the column (or group of columns) is met. Consequently, by determining the actual weight of each container, the columns can be made taller compared to instead assuming each container is filled to its maximum load weight (i.e., if containers are filled below their weight limit, more can be added to a container stack before weight limit for the column is met). Better use of storage space can therefore be brought about by having taller container stacks. At the same time, the risk of exceeding the weight limit of a column (or group of columns) is mitigated because the actual weight of the column is monitored by determining the actual weight of each container, rather than making an assumption as to the container weight.

In a third implementation of the container weight monitoring process, the at least one weight parameter can be the measured container weight of the first container. The at least one weight threshold can be a predetermined maximum weight limit for the first container.

Different types of container in the automated storage and retrieval system can have different maximum container weight limits.

The predetermined maximum container weight limit for the first container can be stored in computer-storage accessible by the controller. The computer-storage can comprise a datastore of unique identifiers of containers and their corresponding maximum container weight limits. The controller can access the predetermined maximum container weight limit of the first container using the unique identifier of the first container. The unique identifier of the first container can be received in a message with the measured container weight of the first container. Alternatively, the controller can be configured to associate the received measured container weight with a predetermined unique identifier of the first container (e.g., the controller instructs the weighing of the first container with the known unique identifier or receives a notification of the weighing of the first container with the known unique identifier, then receives the measured weight, and then associates the received measured weight with the unique identifier).

The controller can then compare the predetermined maximum container weight limit to the measured container weight of the first container.

Controlling the automated storage and retrieval system to configure an arrangement of containers in the automated storage and retrieval system based upon the comparison can comprise inhibiting the first container from being stored in the automated storage and retrieval system when the measured container weight of the first container exceeds the predetermined maximum container weight limit for the first container.

When the weight measuring component is arranged at the port, inhibiting the first container from being stored in the automated storage and retrieval system can comprise the controller controlling a port to refuse insertion of the first container into the grid. This can comprise moving the container out of the port for returning to an operator, and/or blocking a port door from opening, and/or not instructing a container-handling robotic vehicle to collect the container.

When the weight measuring component is arranged as a component of the container-handling robotic vehicle, or as a weighing platform on the grid, inhibiting the first container from being stored in the automated storage and retrieval system can comprise the controller sending instructions to the container-handling robotic to return the container to a port and placing the container in the port. Instructions can also be sent to the port, comprising controlling the port to move the container out of the port for returning to an operator.

Controlling the automated storage and retrieval system to configure an arrangement of containers in the automated storage and retrieval system based upon the comparison can comprise permitting the first container to be stored in the automated storage and retrieval system when the measured container weight of the first container does not exceed the predetermined maximum container weight limit for the first container.

Permitting the first container to be stored in the automated storage and retrieval system can comprise the controller sending instructions to a container-handling robotic vehicle that is assigned to transport the first container. The instructions can direct the container-handling robotic vehicle to a predetermined column for storing the first container. The instructions can instruct the container-handling robotic vehicle to add the container to the column. When the weight measuring component is arranged at a port, the instructions can also direct the container-handling robotic vehicle to the port to collect the container from the port.

In this way, the container weight can be monitored and excessively weighted containers can be inhibited from insertion to the automated storage and retrieval system. This can mitigate downtime due to potential damage to an over-weighted container, or damage to other containers (or other system components) due to an over-weighted container. This also mitigates the risk of over-loading a containers that have lower maximum container weight limits, for example due to operator error.

The controller can be configured to perform at least one of the first implementation, the second implementation, and the third implementation of the container weight monitoring process.

The controller can be the main controller of the automated storage and retrieval system. The controller can control the movement of robotic vehicles in the system, and the arrangement of the containers within the automated storage and retrieval system.

The present disclosure provides an automated storage and retrieval system comprising the controller.

The automated storage and retrieval system can further comprise the weight measuring component.

The automated storage and retrieval system can further comprise a communication channel.

The weight measuring component can be configured to measure the measured container weight of the first container.

The weight measuring component can measure the container weight when (or before) the container is inserted into the automated storage and retrieval system.

The communication channel can be configured to transmit the measured container weight to the controller.

The communication channel can be a wireless or wired connection.

The weight measuring component can be integrated into a container-handling robotic vehicle of the automated storage and retrieval system.

The container-handling robotic vehicle can be configured to send the measured container weight to the controller using the communication channel.

The weight measuring component can be integrated into a container lifting device of the container-handling robotic vehicle. The container lifting device can be configured to lift a container. The container-handling robotic vehicle can be capable of measuring the container weight when lifting the first container to transport the first container in the automated storage and retrieval system.

When integrated into the container lifting device, the weight measuring component can be configured as a crane scale configured to measure the hanging weight of a container.

When integrated into the container lifting device, the weight measuring component can be configured as a processing unit, associated with a lift motor, that determines a weight of a container using a predetermined relationship between container weight and electrical power applied to the lift motor of the container lifting device to lift the container. The predetermined relationship can be stored in computer-storage accessible by the processing unit. The predetermined relationship can be a look-up table stored in the computer-storage. The predetermined relationship can be a functional relationship of container weight as a function of electrical power applied to the lift motor, stored in the computer-storage.

This can operate on the principle that, when the container lifting device is lifting a heavier container, higher electrical power is applied to the lift motor to lift the container; comparatively, when the container lifting device is lifting a lighter container, lower electrical power is applied to the lift motor to lift the container.

In another example, the weight measuring component can measure the container weight based on electrical power applied to a drive motor of the container-handling-robotic vehicle. The drive motor can be a motor that causes the container-handling robotic vehicle to traverse the automated storage and retrieval system.

The weight measuring component can be configured as a processing unit associated with the drive motor that determines a weight of a container using a predetermined relationship between container weight and electrical power applied to the drive motor for acceleration and/or deceleration of the container-handling robotic vehicle when carrying the container. The predetermined relationship can be stored in computer-storage accessible by the processing unit. The predetermined relationship can be a look-up table stored in the computer-storage. The predetermined relationship can be a functional relationship of container weight as a function of electrical power applied to the drive motor, stored in the computer-storage.

This can operate on the principle that, when the container-handling robotic vehicle is carrying a heavier container, higher electrical power is applied to the drive motor to control acceleration/deceleration at predetermined rates; comparatively, when the container-handling robotic vehicle is carrying a lighter container, lower electrical power is applied to the drive motor to control acceleration/deceleration at predetermined rates.

The weight measuring component can be integrated into a port of the automated storage and retrieval system. The port can be configured for the insertion/removal of containers into the automated storage and retrieval system.

The port can be configured to send the measured container weight to the controller using the communication channel.

When integrated into a port of the automated storage and retrieval system, the weight measuring component can be a weighing platform in the port.

The weight measuring component can be integrated into the automated storage and retrieval system as a weighing platform. The weighing platform can be arranged such that a container-handling robotic vehicle carrying the first container moves onto the platform and a total weight of the first container and container-handling robotic vehicle is weighed. The container weight of the first container can be determined by subtracting a predetermined weight of the container-handling robotic vehicle from the measured total weight.

The weighing platform can be configured to send the measured container weight to the controller using the communication channel.

The weight monitoring component can be configured to send a message including the measured weight of the container to the controller, using the communication channel, after weighing the container.

The message can also include a unique identifier of the container. In this way, the controller can be capable of determining which container the measured weight corresponds to in the automated storage and retrieval system.

Alternatively, the controller can be configured to associate the received measured container weight with a predetermined unique identifier of the first container (e.g., the controller instructs the weighing of the first container with the known unique identifier or receives a notification of the weighing of the first container with the known unique identifier, then receives the measured weight, and then associates the received measured weight with the unique identifier).

The weight monitoring component can have a communication module and send the message directly to the controller using the communication channel.

Alternatively, when the weight monitoring component is arranged at a container-handling robotic vehicle, the weight monitoring component can send the message to the controller via a communication module of the container-handling robotic vehicle.

Alternatively, when the weight monitoring component is arranged at a port, the weight monitoring component can send the message to the controller via a communication module of the port.

Alternatively, when the weight monitoring component is arranged at a weighing platform on the grid, the weight monitoring component can send the message to the controller via a communication module of such a weighing platform.

The present disclosure also provides a method for container weight monitoring in an automated storage and retrieval system comprising a plurality of containers. The method can comprise receiving a measured container weight of a first container in the automated storage and retrieval system. The measured container weight can be measured by a weight measuring component of the automated storage and retrieval system.

The method can comprise comparing at least one weight parameter in the automated storage and retrieval system to at least one weight threshold. The at least one weight parameter can be determined using the measured container weight.

The method can comprise controlling the automated storage and retrieval system to configure an arrangement of containers in the automated storage and retrieval system based upon the comparison.

The method can also comprise steps to bring about any of the aforementioned features.

The present disclosure also provides a computer-readable medium with instructions stored thereon. When executed by one or more processors of a controller of an automated storage and retrieval system comprising a plurality of containers, the instructions can cause the controller to receive a measured container weight of a first container in the automated storage and retrieval system. The measured container weight is measured by a weight measuring component of the automated storage and retrieval system.

The instructions can cause the controller to compare at least one weight parameter in the automated storage and retrieval system to at least one weight threshold. The at least one weight parameter can be determined using the measured container weight.

The instructions can cause the controller to control the automated storage and retrieval system to configure an arrangement of containers in the automated storage and retrieval system based upon the comparison.

The computer-readable medium can also have instructions stored thereon to bring about any of the other aforementioned features.

The computer-readable medium can be a non-transitory computer-readable medium.

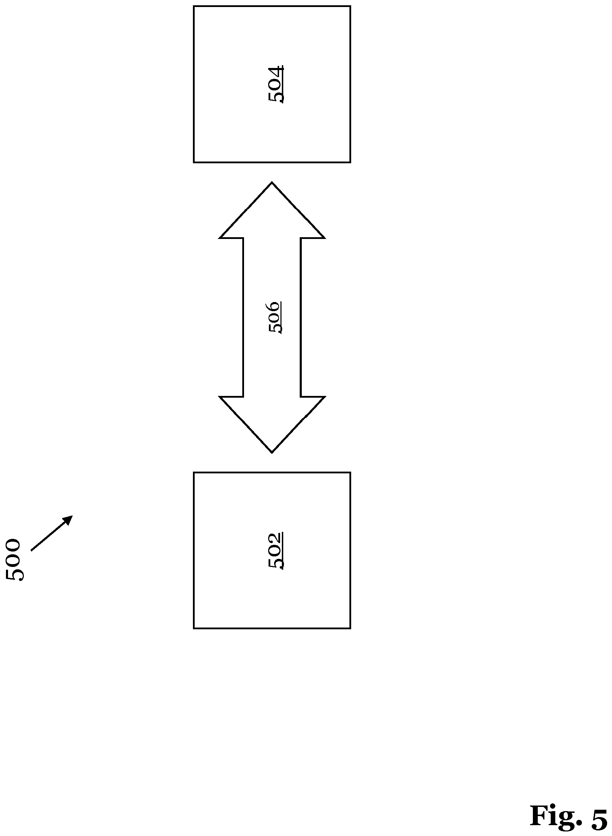

Turning to Figs. 5 to 9, specific implementations of the container weight monitoring are presented.

Fig. 5 is a block diagram of the components of a container weight monitoring system 500. The container weight monitoring system 500 includes a weight measuring component 502, a communication channel 506 and a controller 504.

The weight monitoring component 502 measures the container weight when (or before) the container is inserted into the automated storage and retrieval system.

The weight monitoring component 502 can be realised in several ways.

In a first example, the weight measuring component 502 is integrated into a port 130, 132 of the automated storage and retrieval system. The port 130, 132 is configured for the insertion of containers into the automated storage and retrieval system, as described with reference to Fig. 1. The weight measuring component 502 is a weighing platform in the port 130, 132. The container is placed onto the weighing platform and a weight sensor in the weighing platform determines the weight of the container.

In a second example, the weight monitoring component 502 is integrated into a container-handling robotic vehicle 122, 202, 204 of the automated storage and retrieval system. The container-handling robotic vehicle 122, 202, 204 is configured to collect, transport and deposit containers within the automated storage and retrieval system, as described with reference to Figs. 1 to 3C.

The weight measuring component 502 is integrated into the container lifting device 304, 312 of the container-handling robotic vehicle 122, 202, 204. The container lifting device 304, 312 is configured to lift a container. The weight measuring component 502 is capable of measuring the container weight when the container-handling robotic vehicle 122, 202, 204 lifts a container to transport the container in the automated storage and retrieval system.

When integrated into the container lifting device 304, 312, the weight measuring component 502 is configured as a crane scale that measures the hanging weight of a container.

Alternatively, when integrated into the container lifting device 304, 312, the weight measuring component 502 is configured as a processing unit, associated with a lift motor, that determines a weight of a container using a predetermined relationship between container weight and electrical power applied to the lift motor of the container lifting device to lift the container. The predetermined relationship is stored in computer-storage accessible by the processing unit as a look-up table or as a functional relationship of container weight as a function of electrical power applied to the lift motor. When the container lifting device is lifting a heavier container, higher electrical power is applied to the lift motor to lift the container; comparatively, when the container lifting device is lifting a lighter container, lower electrical power is applied to the lift motor to lift the container.

Alternatively, when the weight monitoring component 502 is integrated into a container-handling robotic vehicle 122, 202, 204, the weight measuring component 502 is configured to measure the container weight based on electrical power applied to a drive motor of the container-handling-robotic vehicle 122, 202, 204. The drive motor is a motor that causes the container-handling robotic vehicle 122, 202, 204 to traverse the automated storage and retrieval system. The weight measuring component 502 is configured as a processing unit associated with the drive motor that determines a weight of a container using a predetermined relationship between container weight and electrical power applied to the drive motor for acceleration and/or deceleration of the container-handling robotic vehicle 122, 202, 204 when carrying the container. When the container-handling robotic vehicle is carrying a heavier container, higher electrical power is applied to the drive motor to control acceleration/deceleration at predetermined rates; comparatively, when the container-handling robotic vehicle is carrying a lighter container, lower electrical power is applied to the drive motor to control acceleration/deceleration at predetermined rates. The predetermined relationship is stored in computer-storage accessible by the processing unit. The predetermined relationship is a look-up table or a functional relationship of container weight as a function of electrical power applied to the drive motor.

In a third example, the weight measuring component 502 is a weighing platform on the grid 100. The weighing platform is arranged such that a container-handling robotic vehicle 122, 202, 204 carrying the container moves onto the platform. A total weight of the container and container-handling robotic vehicle 122, 202, 204 is weighed, and the container weight of the container is determined by subtracting a predetermined weight of the container-handling robotic vehicle 122, 202, 204 from the measured total weight.

The controller 504 is the main controller of the automated storage and retrieval system (for example, the controller 504 is the processing system 400 as described with reference to Fig. 4), that controls the movement of robotic vehicles in the system, and the arrangement of the containers within the system.

The communication channel 506 is configured for the sending/receiving of messages or signals between the weight monitoring component 502 and the controller 504. The communication channel 506 can be realised in several ways. In an example, the communication channel 506 is a wired connection, such as a network cable or cables, between the weight monitoring component 502 and the controller 504. In another example, the communication channel 506 is a wireless connection, such as a connection using an IEEE 802 type wireless network, an LTE network or the like. In such cases, a first communication module is connected to the weight monitoring component 502 and a second communication module is connected to the controller 504 to connect the weight monitoring component 502 and the controller 504 to the communication channel 506.

The weight monitoring component 502 is configured to send a message including the measured weight of the container to the controller 504, using the communication channel 506, after weighing the container. In some examples, the message also includes the unique identifier of the container so that the controller is capable of determining which container the measured weight corresponds to in the automated storage and retrieval system. In other examples, the controller is instead configured to associate the received measured container weight, from the message, with a predetermined unique identifier of the first container (e.g., the controller instructs the weighing of the first container with the known unique identifier or receives a notification of the weighing of the first container with the known unique identifier, then receives the measured weight, and then associates the received measured weight with the unique identifier).

The weight monitoring component 502 has a communication module and sends the message directly to the controller using the communication channel 506.

Alternatively, when the weight monitoring component is arranged at a container-handling robotic vehicle, the weight monitoring component sends the message to controller via a communication module of the container-handling robotic vehicle. When the weight monitoring component is arranged at a port, the weight monitoring component sends the message to controller via a communication module of the port. When the weight monitoring component is arranged at a weighing platform on the grid, the weight monitoring component sends the message to controller via a communication module of such a weighing platform.

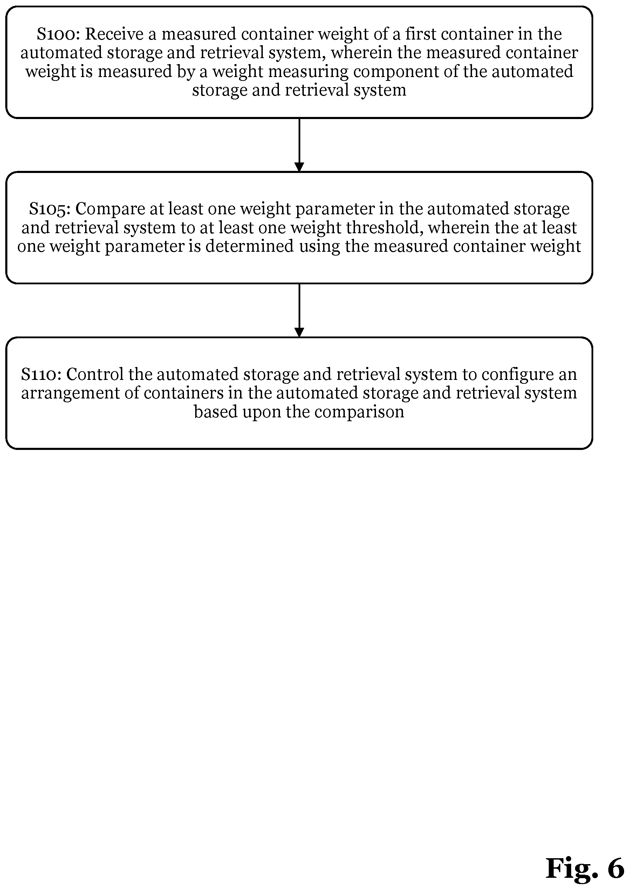

Fig. 6 is a flow chart of a process performed by the controller 504 in monitoring the weight of a container in the automated storage and retrieval system.

At step S100, the controller 504 receives the measured container weight of a first container in the automated storage and retrieval system. The measured container weight is measured by the weight measuring component 502 and is transmitted to the controller 504 using the communication channel 506. The process then progresses to step S105.

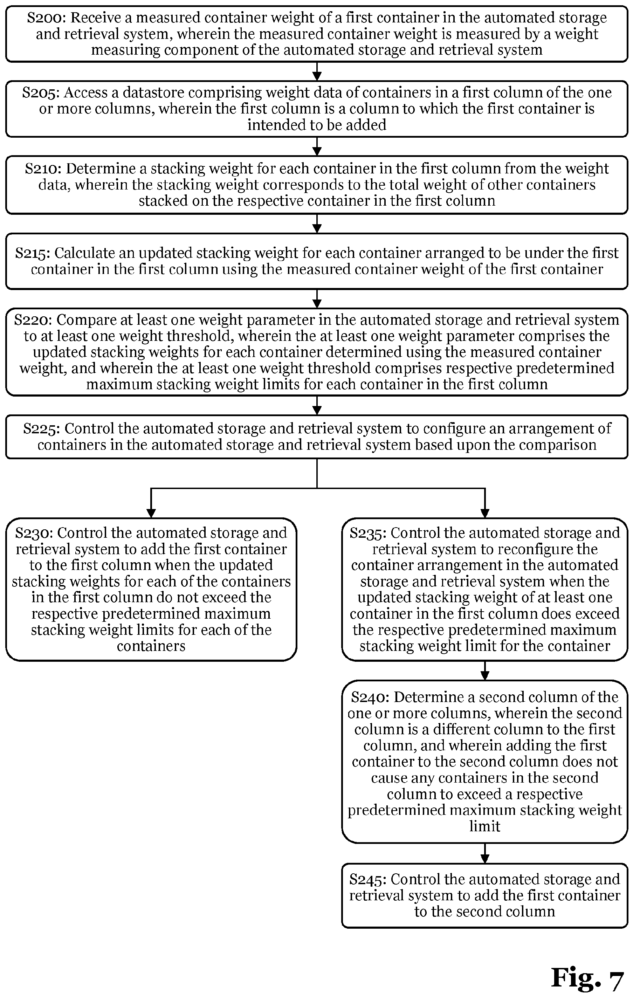

At step S105, the controller 504 determines at least one weight parameter using the received measured container weight. The controller 504 then compares the at least one weight parameter to at least one weight threshold. Such weight parameters and thresholds are discussed with reference to Fig. 7, Fig. 8 and Fig. 9. The process then progresses to step S110.

At step S110, the controller 504 controls the automated storage and retrieval system to configure an arrangement of the containers in the system based upon the comparison at step S105. Such container arrangement control operations are discussed with reference to Fig. 7, Fig. 8 and Fig. 9.

Fig. 7, Fig. 8 and Fig. 9 are flow charts of specific processes for monitoring the weight of a container in the automated storage and retrieval system, in accordance with the process of Fig. 6. The controller 504 is configurable to perform one or more of these specific processes.

Fig. 7 is a flow chart of a process for monitoring the weight of a container in the automated storage and retrieval system that involves determining whether a first container has a weight that would cause a second container to exceed a stacking weight limit of said second container. The second container is a container that is lower in the grid column to which the first container is to be added. In other words, the second container is a container that will be under the first container in the container stack. The stacking weight is the combined weight of all of the containers on top of the second container. The stacking weight limit is a limit of how much stacking weight the second container can safely handle.

At step S200, the controller 504 receives the measured container weight of a first container in the automated storage and retrieval system. The measured container weight is measured by the weight measuring component 502 and is transmitted to the controller 504 using the communication channel 506. The process then proceeds to step S205.

At step S205, the controller 504 accesses a datastore comprising weight data of containers in a first column of the columns in the grid. The datastore is computer-readable storage accessible by the controller 504. The first column is a column to which the first container is intended to be added. The weight data includes and/or is based on the predetermined (i.e., already known/measured) weights of the containers already located in the first column. The process then proceeds to step S210.

At step S210, the controller 504 determines the stacking weight for each container in the first column. This is determined from the weight data as the total weight of other containers stacked on the respective container in the first column.

In some cases, the stacking weight for each container is precalculated and stored in the datastore. That is, the weight data corresponds to stacking weight on each container. To determine the stacking weights, the controller 504 accesses the datastore to retrieve these as the weight data.

In other cases, the controller 504 calculates the stacking weight for each container by accessing the datastore and retrieving data indicating the weight of each container, then calculates the stacking weights for each container, when determining whether to add the first container to the first column.

The process then proceeds to step S215.

At step S215, the controller 504 calculates an updated stacking weight for each container arranged to be under the first container in the first column. The controller 504 calculates this using the measured container weight of the first container. For each container that would be under the first container in the first column, the stacking weight for each container is updated by adding the measured container weight of the first container to yield the updated stacking weight for each container. In this way, the controller 504 determines what the stacking weight on each container beneath the first container in the first column would be, should the first container be added to the first column. The process then proceeds to step S220.

At step S220, the controller 504 compares at least one weight parameter in the automated storage and retrieval system to at least one weight threshold. In the process of Fig. 7, the at least one weight parameter is a plurality of weight parameters that comprise the updated stacking weights for each container in the first column. The at least one weight threshold is a plurality of weight thresholds that comprise respective predetermined maximum stacking weight limits for each container in the first column.

Exceeding the maximum stacking weight limit of a container risks the destabilising the container, and damaging or even collapsing the container. This can lead to the stack of containers in the column also collapsing or becoming stuck.

In some cases, all of the containers in the first column have the same maximum stacking weight limit. In other cases, the containers in the first column have different maximum stacking weight limits. In further cases, the containers in the first column are categorised into two (or more) types of container, and each type of container can have a different maximum stacking weight limit.

The comparison at step S220 comprises determining whether the updated stacking weights for the containers in the first column do or do not exceed the respective predetermined maximum stacking weight limits for each of the containers.

Following the comparison at step S220, the process progresses to step S225.

At step S225, the controller 504 controls the automated storage and retrieval system to configure an arrangement of containers in the automated storage and retrieval system based upon the comparison.

When the updated stacking weights for each of the containers in the first column do not exceed the respective predetermined maximum stacking weight limits for each of the containers, the controlling at step S225 progresses to and comprises step S230.

At step S230, the controller 504 controls the automated storage and retrieval system to add the first container to the first column. That is, the controller 504 configures the automated storage and retrieval system into a configuration wherein the first container is added to the first column.

The controlling at step S230 involves the controller 504 sending instructions to a container-handling robotic vehicle that is assigned to transport the first container. These instructions direct the container-handling robotic vehicle to the first column, and instruct the container-handling robotic vehicle to add the container to the first column. When the weight measuring component 502 is arranged at a port, the instructions first direct the container-handling robotic vehicle to the port to collect the container from the port.

When the updated stacking weight of at least one container in the first column does exceed the respective predetermined maximum stacking weight limit for the container, the controlling at step S225 instead progresses to and comprises steps S235, S240, S245.

At step S235, the controller 504 controls the automated storage and retrieval system to reconfigure the container arrangement in the automated storage and retrieval system. That is, the controller 504 reconfigures the container arrangement by determining a different column to add the first container to, as the first column is not suitable.

At step S240, the controller 504 determines the reconfigured arrangement and then controls the automated storage and retrieval system to be reconfigured into this reconfigured arrangement at step S245.

In more detail, at step S240, the controller 504 determines a second column of the one or more columns. The second column is a different column to the first column, and is a column to which adding the first container does not cause any containers in the column to exceed a respective predetermined maximum stacking weight limit.

After determining that the first column is not suitable for addition of the first container, because the updated stacking weight of at least one container in the first column exceeds the respective predetermined maximum stacking weight limit for the container, the controller 504 picks a different column as the next column for the first container. The controller 504 repeats the process of steps S205-S220 for this next column, in place of the first column (the detail is not repeated, for brevity). When the updated stacking weights for each of the containers in this next column do not exceed the respective predetermined maximum stacking weight limits for each of the containers, this next column is assigned as the second column and the first container is added to this column.

When the updated stacking weight of at least one container in this next column does exceed the respective predetermined maximum stacking weight limit for the container in this next column, it is determined that this column is not suitable, and the process is repeated for another column.

This repeats until a column is found for which the updated stacking weights for each of the containers in the said column do not exceed the respective predetermined maximum stacking weight limits for each of the containers in said column. This column, for which the updated stacking weights for each of the containers in the said column do not exceed the respective predetermined maximum stacking weight limits for each of the containers in said column, is assigned as the second column and the first container is added to this column.

When no column can be determined for which the updated stacking weights for each of the containers in the said column do not exceed the respective predetermined maximum stacking weight limits for each of the containers in said column, the container is refused from and cannot be stored in the automated storage and retrieval system. In such cases, the weight of the container can be reduced by removing some of the contents before reattempting to find a suitable column, or it can be held out of the system until capacity is available.

When the second column has been determined, the process continues to step S245.

At step S245, the controller 504 controls the automated storage and retrieval system to add the first container to the second column.

The controlling at step S245 involves the controller 504 sending instructions to a container-handling robotic vehicle that is assigned to transport the first container. These instructions direct the container-handling robotic vehicle to the second column, and instruct the container-handling robotic vehicle to add the container to the second column. When the weight measuring component 502 is arranged at a port, the instructions first direct the container-handling robotic vehicle to the port to collect the container from the port.

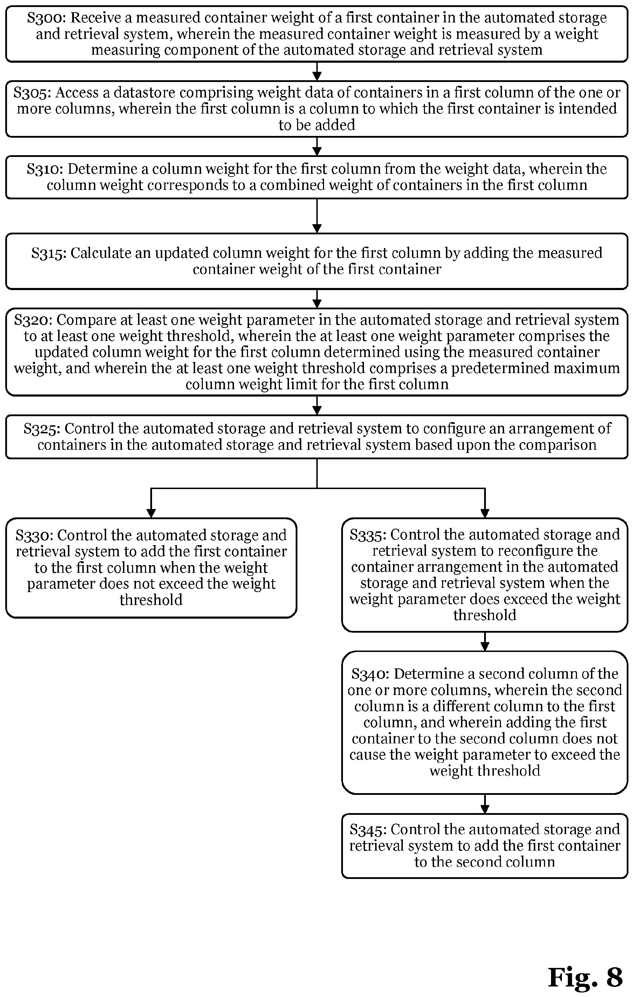

Fig. 8 is a flow chart of a process for monitoring the weight of a container that involves determining whether a container has a weight that would cause a column or group of columns of containers to exceed a weight limit for the column or the group of columns. This weight limit can be set for safety reasons, as well as stability of the stacked column. In a location, such as a warehouse, where the automated storage and retrieval system is arranged, there can be load-bearing weight limits for the floor. If the total weight of the stacked containers in a column of the grid, or group of columns, is greater than the load-bearing limit for an area of the floor, this can lead to damage and/or failure of the floor. The process of Fig. 8 involves determining whether a container has a weight that would cause a column to which the container is to be added to exceed a weight limit for the column, or cause a group of columns including the column to exceed a weight limit for the group of columns, should the container be added to the column, and reconfiguring the storage and retrieval system if the weight limit is exceeded.

At step S300, the controller 504 receives a measured container weight of a first container in the automated storage and retrieval system. The measured container weight is measured by a weight measuring component 502 of the automated storage and retrieval system and is transmitted to the controller 504 using the communication channel 506. The process then proceeds to step S305.

At step S305, the controller 504 accesses a datastore comprising weight data of containers in a first column of the columns in the grid. The datastore is computer-readable storage accessible by the controller 504. The first column is a column to which the first container is intended to be added. The weight data includes and/or is based on the predetermined (i.e., already known/measured) weights of the containers already located in the first column. The process then continues to step S310.

At step S310, the controller 504 determines a column weight for the first column from the weight data. The column weight corresponds to a combined weight of all of the containers in the first column.

In some cases, the weight data accessed at the datastore is the predetermined column weight. That is, the column weight (corresponding to the combined weight of all of the containers in the column) is stored in the datastore, and this is accessed to determine the column weight.

In other cases, the controller 504 calculates the column weight by accessing the weights of each container in the column and determining the total weight through addition of the individual container weights.

The process then proceeds to step S315.

At step S315, the controller 504 calculates an updated column weight for the first column by adding the measured container weight of the first container. That is, the controller 504 adds the measured container weight of the first container to the determined column weight of the first column. In this way, the controller 504 determines what the column weight for the first column will be, should the first container be added to the first column. The process then proceeds to step S320.

At step S320, the controller 504 compares at least one weight parameter in the automated storage and retrieval system to at least one weight threshold. In the process of Fig. 8, the at least one weight parameter is the updated column weight for the first column determined using the measured container weight. The at least one weight threshold is a predetermined maximum column weight limit for the first column. The predetermined maximum column weight limit is stored in computer-readable storage accessible by the controller 504.

The maximum column weight limit is the maximum allowable combined weight of all of the containers stacked in the column. Exceeding the maximum weight column weight limit of the first column could lead to damage or failure of the floor on which the column is arranged, or instability in the column, amongst other potential issues.

The comparison at step S320 comprises determining whether the updated column weight of the first column (i.e., the calculated weight of the column should the first container be added to the first column) does or does not exceed with maximum column weight limit of the first the column. The maximum column weight limit is a predetermined value that is, for example, set during a commissioning phase of the automated storage and retrieval system. In a particular example, this maximum column weight limit is based on a load-bearing weight of the floor on which the column is positioned; this is determined so that the column weight does not exceed the load-bearing capacity of the floor.

In a variation of step S320, the weight data comprises the predetermined weights of the containers already located in a first group of columns including the first column, and the at least one weight parameter is an updated total weight of the first group of columns that includes the updated column weight for the first column. That is, the first column is one column in a first group of columns, and the weight parameter is the updated total weight of this first group of columns that corresponds to the weight of this first group of columns should the first container be added to the first column. The at least one weight threshold is a predetermined maximum weight limit for the first group of columns including the first column.

In this case, the maximum column weight limit is the maximum allowable combined weight of all of the containers stacked in the first column combined and all of the containers in the other columns of the first group. The first group of columns are columns that are adjacent to one another. The comparison comprises determining whether the updated column weight of the first column (i.e., the calculated weight of the column should the first container be added to the first column) combined with the weights of the other columns of the first group does or does not exceed the predetermined maximum weight limit for the first group of columns. The maximum column weight limit for a group of columns is a predetermined value that is, for example, set during a commissioning phase of the automated storage and retrieval system. The predetermined maximum column weight limit for the group of columns is stored in computer-readable storage accessible by the controller 504. In a particular example, this maximum column weight limit for the group of columns is based on a load-bearing weight of the floor on which the group of columns is positioned; this is determined so that the weight of the group of columns does not exceed the load-bearing capacity of the floor. If a group of columns is too heavy for the area of floor on which it is positioned, the floor could be damaged or collapse.

Following the comparison at step S320, the process progresses to step S325.

At step S325, the controller 504 controls the automated storage and retrieval system to configure an arrangement of containers in the automated storage and retrieval system based upon the comparison.

When the weight parameter does not exceed the weight threshold, the controlling step at S325 progresses to and comprises step S330.

At step S330, the controller 504 controls the automated storage and retrieval system to add the first container to the first column. That is, the controller 504 configures the automated storage and retrieval system into a configuration wherein the first container is added to the first column.

The controlling at step S330 involves the controller 504 sending instructions to a container-handling robotic vehicle that is assigned to transport the first container. These instructions direct the container-handling robotic vehicle to the first column, and instruct the container-handling robotic vehicle to add the container to the first column. When the weight measuring component 502 is arranged at a port, the instructions first direct the container-handling robotic vehicle to the port to collect the container from the port.

When the weight parameter does exceed the weight threshold, the controlling step at S325 instead progresses to and comprises steps S335, S340, S345.

At step S335, the controller 504 controls the automated storage and retrieval system to reconfigure the container arrangement in the automated storage and retrieval system. That is, the controller 504 reconfigures the container arrangement by determining a different column to add the first container to, as the first column is not suitable.

At step S340, the controller 504 determines the reconfigured arrangement and then controls the automated storage and retrieval system to be reconfigured into this reconfigured arrangement at step S345.

At step S340, in the case where the weight parameter is the updated column weight for the first column, and the weight threshold is the predetermined maximum column weight limit for the first column, the controller 504 determines a second column of the one or more columns. The second column is a different column to the first column, and is a column to which adding the first container does not cause the updated column weight of said second column to exceed the respective predetermined maximum column weight limit of said second column.

That is, after determining that the first column is not suitable for addition of the first container, because the updated column weight exceeds the predetermined maximum column weight limit for the first column, the controller 504 picks a different column as the next column for the first container. The controller 504 repeats the process of steps S305-S320 for this next column, in place of the first column (the detail is not repeated, for brevity). When the updated column weight for this next column does not exceed the respective predetermined maximum column weight limit for this next column, this next column is assigned as the second column and the first container is added to this column.

When the updated column weight of this next column does exceed the respective predetermined maximum column weight limit for this next column, it is determined that this column is not suitable, and the process is repeated for another column.

This repeats until a column is found for which the updated column weight of the said column does not exceed the respective predetermined maximum column weight limit for said column. This column, for which the updated column weight for the said column does not exceed the respective predetermined maximum column weight limit, is assigned as the second column and the first container is added to this column.

When no column can be determined for which the updated column weight of the said column does not exceed the respective predetermined maximum column weight limit for the said column, the container is refused from and cannot be stored in the automated storage and retrieval system. In such cases, the weight of the container can be reduced by removing some of the contents before reattempting to find a suitable column, or it can be held out of the system until capacity is available.

At step S340, in the case where the weight parameter is the updated total weight of the first group of columns that includes the updated column weight for the first column, and the weight threshold is the predetermined maximum weight limit for the first group of columns that includes the first column, the controller 504 determines a second column that is in a second group of a columns that is a different group of columns to the first column. The second column is a different column to the first column, and is a column to which adding the first container does not cause the updated total weight of the second group of columns including said second column to exceed the respective predetermined maximum weight limit for said second group of columns including the second column.

In some cases, the different groups of columns are overlapping, such that a column is in more that one group. In other cases, the different groups of columns are nonoverlapping, such that each column is in only one group.

After determining that the first column is not suitable for addition of the first container, because updated total weight of the first group of columns exceeds the predetermined maximum weight limit for the first group of columns, the controller 504 picks a different column as the next column for the first container. This next column is in a different group of columns to the first column. The controller 504 repeats the process of steps S305-S320 for this next column, in place of the first column (the detail is not repeated, for brevity). When the updated total weight of the group of columns including this next column does not exceed the respective predetermined maximum weight limit for the group of columns including this next column, this next column is assigned as the second column and the first container is added to this column.

When the updated total weight of the group of columns including this next column does exceed the respective predetermined maximum weight limit for the group of columns including this next column, it is determined that this column is not suitable, and the process is repeated for another column.

This repeats until a column is found for which the updated total weight of the group of columns including said column does not exceed the respective predetermined maximum weight limit for the group of columns including said column. This column, for which the updated total weight of the group of columns including said column does not exceed the respective predetermined maximum weight limit for the group of columns including said column, is assigned as the second column and the first container is added to this column.

When no column can be determined for which the updated total weight of the group of columns including said column does not exceed the respective predetermined maximum weight limit for the group of columns including said column, the container is refused from and cannot be stored in the automated storage and retrieval system. In such cases, the weight of the container can be reduced by removing some of the contents before reattempting to find a suitable column, or it can be held out of the system until capacity is available.

When the second column has been determined, the process continues to step S345.

At step S345, the controller 504 controls the automated storage and retrieval system to add the first container to the second column.

The controlling at step S345 involves the controller 504 sending instructions to a container-handling robotic vehicle that is assigned to transport the first container. These instructions direct the container-handling robotic vehicle to the second column, and instruct the container-handling robotic vehicle to add the container to the second column. When the weight measuring component 502 is arranged at a port, the instructions first direct the container-handling robotic vehicle to the port to collect the container from the port.

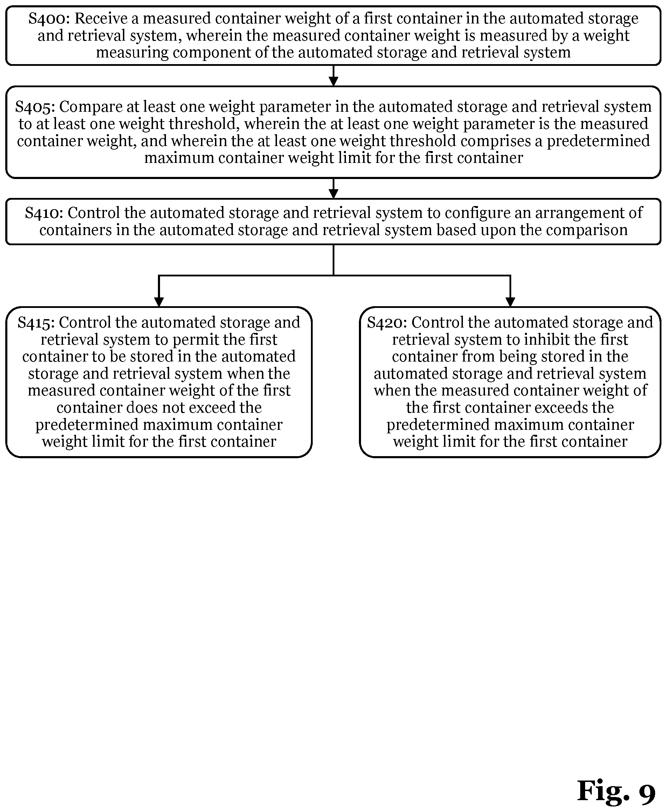

Fig. 9 is a flow chart of a process for monitoring the weight of a container that involves determining whether the weight of the container exceeds a weight limit for the container. A container in an automated storage and retrieval system can have a maximum container weight limit (i.e., the weight of products that are contained within the container). Exceeding this weight could lead to damage to the container, faults in the system, and the like. Furthermore, different containers in the system can have different maximum container weight limits; for example there may be two types of container in the system, where the first type has a lower maximum container weight limit than a second type of container. The process of Fig. 9 involves determining whether the container exceeds the maximum container weight limit of the container, and configuring the system in response to this.

At step S400, the controller 504 receives a measured container weight of a first container in the automated storage and retrieval system. The measured container weight is measured by a weight measuring component 502 of the automated storage and retrieval system and is transmitted to the controller 504 using the communication channel 506. The process then proceeds to step S405.

At step S405, the controller 504 compares at least one weight parameter in the automated storage and retrieval system to at least one weight threshold. In the process of Fig. 9, the at least one weight parameter is the measured container weight. The at least one weight threshold comprises a predetermined maximum container weight limit for the first container.

Different types of container in the automated storage and retrieval system can have different maximum container weight limits. For example, a lightweight container has a lower maximum weight limit than a regular container. The predetermined maximum container weight limit for the first container is stored in computer-storage accessible by the controller 504. Said computer-storage comprises a datastore of unique identifiers of containers and their corresponding maximum container weight limits. The controller 504 accesses the predetermined maximum container weight limit of the first container using the unique identifier of the first container (received in the message at step S400, or separately available to the controller, as discussed). The controller 504 then compares the measured container weight of the first container to the predetermined maximum container weight limit of the first container.

At step S410, the controller 504 controls the automated storage and retrieval system to configure an arrangement of containers in the automated storage and retrieval system based upon the comparison.

When the measured container weight of the first container does not exceed the predetermined maximum container weight limit for the first container, the controlling at step S410 progresses to and comprises step S415.

At step S415, the controller 504 controls the automated storage and retrieval system to permit the first container to be stored in the system. That is, the controller 504 configures the automated storage and retrieval system into a configuration wherein the first container is introduced into the grid.

The controlling at step S415 involves the controller 504 sending instructions to a container-handling robotic vehicle that is assigned to transport the first container. These instructions direct the container-handling robotic vehicle to a predetermined column for storing the first container, and instruct the container-handling robotic vehicle to add the container to the column. When the weight measuring component 502 is arranged at a port, the instructions first direct the container-handling robotic vehicle to the port to collect the container from the port.

When the measured container weight of the first container does exceed the predetermined maximum container weight limit for the first container, the controlling at step S410 instead progresses to and comprises step S420.

At step S420, the controller 504 controls the automated storage and retrieval system to inhibit the first container from being stored in the automated storage and retrieval system. That is, the controller 504 configures the automated storage and retrieval system into a configuration wherein the first container is not introduced into the grid.

When the weight measuring component 502 is arranged at the port, the controlling at step S420 involves the controller 504 controlling the port to refuse insertion of the container into the grid. In an example, this involves moving the container out of the port for returning to an operator rather than moving the container into the grid, blocking a port door from opening, or not instructing a container-handling robotic vehicle to collect the container. When the weight measuring component 502 is arranged as a component of the container-handling robotic vehicle, or as a weighing platform on the grid, the controlling at step S420 involves sending instructions to the container-handling robotic to return the container to a port and placing the container in the port. Instructions can also be sent to the port, comprising controlling the port to move the container out of the port for returning to an operator. The operator can then remove (some of) the contents of the container, to lower the weight, so that the container can be stored in the grid.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. . A controller for container weight monitoring in an automated storage and retrieval system comprising a plurality of containers, wherein the controller is configured to:
receive a measured container weight of a first container in the automated storage and retrieval system, wherein the measured container weight is measured by a weight measuring component of the automated storage and retrieval system;
compare at least one weight parameter in the automated storage and retrieval system to at least one weight threshold, wherein the at least one weight parameter is determined using the measured container weight; and
control the automated storage and retrieval system to configure an arrangement of containers in the automated storage and retrieval system based upon the comparison.

2. . The controller of claim 1, wherein the plurality of containers in the automated storage and retrieval system are arranged in one or more columns of stacked containers, and the controller is further configured to:
access a datastore comprising weight data of containers in a first column of the one or more columns, wherein the first column is a column to which the first container is intended to be added;
determine a stacking weight for each container in the first column from the weight data, wherein the stacking weight corresponds to the total weight of other containers stacked on the respective container in the first column; and
calculate an updated stacking weight for each container arranged to be under the first container in the first column using the measured container weight of the first container;
wherein the at least one weight parameter comprises the updated stacking weights for each container, and the at least one weight threshold comprises respective predetermined maximum stacking weight limits for each container in the first column; and
when controlling the automated storage and retrieval system to configure the arrangement of containers, the controller is configured to:
control the automated storage and retrieval system to add the first container to the first column when the updated stacking weights for each of the containers in the first column do not exceed the respective predetermined maximum stacking weight limits for each of the containers;
control the automated storage and retrieval system to reconfigure the container arrangement in the automated storage and retrieval system when the updated stacking weight of at least one container in the first column does exceed the respective predetermined maximum stacking weight limit for the container.

3. . The controller of claim 2, wherein when controlling the automated storage and retrieval system to reconfigure the container arrangement, the controller is configured to:
determine a second column of the one or more columns, wherein the second column is a different column to the first column, and wherein adding the first container to the second column does not cause any containers in the second column to exceed a respective predetermined maximum stacking weight limit; and
control the automated storage and retrieval system to add the first container to the second column.

4. . The controller of claim 1, wherein the plurality of containers in the automated storage and retrieval system are arranged in one or more columns of stacked containers, and the controller is further configured to:
access a datastore comprising weight data of containers in a first column of the one or more columns, wherein the first column is a column to which the first container is intended to be added;
determine a column weight for the first column from the weight data, wherein the column weight corresponds to a combined weight of containers in the first column; and
calculate an updated column weight for the first column by adding the measured container weight of the first container;
wherein the at least one weight parameter comprises the updated column weight for the first column, and the at least one weight threshold comprises a predetermined maximum column weight limit for the first column; and
when controlling the automated storage and retrieval system to configure the arrangement of containers, the controller is configured to:
control the automated storage and retrieval system to add the first container to the first column when the weight parameter does not exceed the weight threshold;
control the automated storage and retrieval system to reconfigure the container arrangement in the automated storage and retrieval system when the weight parameter does exceed the weight threshold.

5. . The controller of claim 4, wherein the at least one weight parameter further comprises an updated total weight of a group of columns that includes the updated column weight for the first column, and the at least one weight threshold further comprises a predetermined maximum weight limit for the group of columns including the first column.

6. . The controller of claim 4 or claim 5, wherein the weight threshold is based on a weight limit for a floor area on which the first column is arranged.

7. . The controller of any one of claims 4 to 6, wherein when controlling the automated storage and retrieval system to reconfigure the container arrangement, the controller is configured to:
determine a second column of the one or more columns, wherein the second column is a different column to the first column, and wherein adding the first container to the second column does not cause the weight parameter to exceed the weight threshold; and
control the automated storage and retrieval system to add the first container to the second column.

8. . The controller of claim 1, wherein the at least one weight parameter is the measured container weight of the first container, and the at least one weight threshold is a predetermined maximum container weight limit for the first container, and wherein controlling the automated storage and retrieval system to configure an arrangement of containers in the automated storage and retrieval system based upon the comparison comprises inhibiting the first container from being stored in the automated storage and retrieval system when the measured container weight of the first container exceeds the predetermined maximum container weight limit for the first container.

9. . The controller of claim 8, wherein controlling the automated storage and retrieval system to configure an arrangement of containers in the automated storage and retrieval system based upon the comparison further comprises permitting the first container to be stored in the automated storage and retrieval system when the measured container weight of the first container does not exceed the predetermined maximum container weight limit for the first container.

10. . An automated storage and retrieval system comprising the controller of any preceding claim, and further comprising the weight measuring component and a communication channel;
wherein the weight measuring component is configured to measure the measured container weight of the first container; and
the communication channel is configured to transmit the measured container weight to the controller.

11. . The automated storage and retrieval system of claim 10, wherein the weight measuring component is integrated into a container-handling robotic vehicle of the automated storage and retrieval system, and the container-handling robotic vehicle is configured to send the measured container weight to the controller using the communication channel.

12. . The automated storage and retrieval system of claim 10, wherein the weight measuring component is integrated into a port configured for the insertion of containers into the automated storage and retrieval system, and the port is configured to send the measured container weight to the controller using the communication channel.

13. . The automated storage and retrieval system of claim 10, wherein the weight measuring component is a weighing platform arranged such that a container-handling robotic vehicle carrying the first container moves onto the platform and a total weight of the first container and container-handling robotic vehicle is weighed, and the container weight of the first container is determined by subtracting a predetermined weight of the container-handling robotic vehicle from the measured total weight; and
wherein the weighing platform is configured to send the measured container weight to the controller using the communication channel.

14. . A method for container weight monitoring in an automated storage and retrieval system comprising a plurality of containers, wherein the method comprises:
receiving a measured container weight of a first container in the automated storage and retrieval system, wherein the measured container weight is measured by a weight measuring component of the automated storage and retrieval system;
comparing at least one weight parameter in the automated storage and retrieval system to at least one weight threshold, wherein the at least one weight parameter is determined using the measured container weight; and
controlling the automated storage and retrieval system to configure an arrangement of containers in the automated storage and retrieval system based upon the comparison.

15. . A computer-readable medium with instructions stored thereon which, when executed by one or more processors of a controller of an automated storage and retrieval system comprising a plurality of containers, cause the controller to:
receive a measured container weight of a first container in the automated storage and retrieval system, wherein the measured container weight is measured by a weight measuring component of the automated storage and retrieval system;
compare at least one weight parameter in the automated storage and retrieval system to at least one weight threshold, wherein the at least one weight parameter is determined using the measured container weight; and
control the automated storage and retrieval system to configure an arrangement of containers in the automated storage and retrieval system based upon the comparison.
